# EUROPÄISCHE PATENTANMELDUNG

(11) **EP 1 447 261 A1**
(43) Veröffentlichungstag der Anmeldung: **18.08.2004**
(21) Anmeldenummer: 03100336.1
(22) Anmeldetag: 14.02.2003
(51) Int. Cl.: B60K 41/24

(54) **Anfahrhilfe für ein Fahrzeug**

(71) Anmelder: Getrag Ford Transmissions GmbH, 50735 Köln (DE)
(72) Erfinder: Moehlmann, Reinhard, 58097 Hagen (DE)
(74) Vertreter: Drömer, Hans-Carsten, Dr.-Ing.

(57) **Zusammenfassung**

Die Erfindung bezieht sich auf eine Anfahrhilfe 10 für ein Fahrzeug, insbesondere für ein Kraftfahrzeug, mit einem automatischen Kupplungs- und Bremssystem 11 und mit einer elektronischen Steuereinrichtung 12, wobei diese im wesentlichen der Steuerung des automatischen Kupplungs- und Bremssystemes 11 dient, umfassend eine vom Fahrzeugführer willkürlich zu betätigende Bedieneinrichtung 13 zur Durchführung eines gestützten Anfahrvorganges, wobei die Steuereinrichtung 12 für das Kupplungs- und Bremssystem 11 auch zur Steuerung des gestützten Anfahrvorganges ausgebildet ist, derart, daß ausgehend von über Erfassungssensoren und -einrichtungen 14 aufgenommenen Sensorsignalen 15 Steuersignale 16 zur Beaufschlagung des automatischen Kupplungs- und Bremssystemes 11 für den gestützten Anfahrvorgang gemäß dem Wunsch des Fahrzeugführers von der Steuereinrichtung 12 ausgegeben werden. Es ist dabei erfindungsgemäß vorgesehen, daß die Bedieneinrichtung 13 zur Durchführung des gestützten Anfahrvorganges im wesentlichen durch das Gaspedal 17 des Fahrzeuges gebildet ist.

## Beschreibung

Die Erfindung bezieht sich auf eine Anfahrhilfe für ein Fahrzeug, insbesondere für ein Kraftfahrzeug, mit einem automatischen Kupplungs- und Bremssystem und mit einer elektronischen Steuereinrichtung, wobei diese im wesentlichen der Steuerung des automatischen Kupplungs- und Bremssystemes dient, umfassend eine vom Fahrzeugführer willkürlich zu betätigende Bedieneinrichtung zur Durchführung eines gestützten Anfahrvorganges, wobei die Steuereinrichtung für das Kupplungs - und Bremssystem auch zur Steuerung des gestützten Anfahrvorganges ausgebildet ist, derart, daß ausgehend von über ErFassungssensoren und -einrichtungen aufgenommenen Sensorsignalen Steuersignale zur Beaufschlagung des automatischen Kupplungs- u nd Bremssystemes für den gestützten Anfahrvorgang gemäß dem Wunsch des Fahrzeugführers von der Steuereinrichtung ausgegeben werden.

Aus dem Stand der Technik sind verschiedene Systeme mit integrierten Anfahrhilfen und/oder Fahrassistenzvorrichtungen für Fahrzeuge, insb. für Kraftfahrzeuge bekannt. Die bekannten Systeme sind dabei zumeist im wesentlichen zur Steuerung der Bremswirkung bzw. zur Beeinflussung der Bremsanlage eines Fahrzeuges ausgelegt.

Es ist z.B. aus der DE 199 31 345 A1 eine Bremsanlage für Kraftfahrzeuge bekannt, mit einer elektromechanischen Feststellbremsvorrichtung, die ein Bedienelement zur Erfassung des Bremsbetätigungswunsches des Fahrers umfaßt, einer elektronischen Fahrerassistenzvorrichtung zur automatischen Umsetzung zumindest einer bremsenspezifischen Fahrerassistenzfunktion, einer elektronisch ansteuerbaren Aktuatoreinrichtung zur Betätigung zumindest einer Radbremse und einer elektronischen Steuereinrichtung zur Umwandlung von Eingangssignalen in entsprechende Ausgangssignale zur Ansteuerung der Aktuatoreinrichtung, wobei die Eingangssignale den Betriebszustand des Kraftfahrzeuges bzw. Zustandsdaten von Bedieneinrichtungen repräsentieren. Es weist dabei die Steuereinrichtung ein erstes Modul zur Umwandlung von Eingangssignalen in Signale zur Umsetzung einer vom Fahrer veranlaßten Feststellbremsfunktion sowie ein zweites Modul zur Umwandlung der Eingangssignale in Signale zur Umsetzung der automatischen Fahrerassistenzfunktion auf. Es sollen mit dieser Anordnung bei einer Bremsanlage mit elektrischer Feststellbremsfunktion sowie komfortorientierter, bremsenspezifischer Fahrerassistenzfunktionen (Anfahrhilfe, Hillholder, Einparkunterstützung etc.) erreicht werden, Eingangsdaten zum Fahrzustand des Kraftfahrzeuges sowie zur Erfassung des Fahrerwunsches innerhalb einer integrierten Steuereinrichtung derart weiterzuverarbeiten, daß ein sicherer und die Fahrsituation berücksichtigender Betrieb der Bremsanlage gewährleistet ist. Dazu ist vorgesehen, die elektronische Steuereinrichtung zur Erzeugung von Ansteuersignalen für eine nachgeschaltete Aktuatoreinrichtung, die mit den Radbremsen in Verbindung steht, modular zu gestalten. Dazu erhält die Steuereinrichtung einzelne Softwaremodule, die entsprechend ihrer Funktion die von der Steuereinrichtung erfaßten Eingangsdaten auswerten und weiterverarbeiten. Besondere Bedeutung soll dabei einem Koordinationsmodul zukommen, welches die von den Einzelmodulen gelieferten Anforderungsignale koordiniert und davon ausgehend resultierende Ausgangssignale zur Ansteuerung der mit den Radbremsen in Verbindung stehenden Aktuatoreinrichtung generiert.

Es soll bei der hier beschriebenen Anordnung durch den modulartigen Aufbau der Softwarepakete innerhalb der Steuereinrichtung ein verbesserter und insb. schnellerer Datenfluß ermöglicht werden, der insgesamt die Leistungsfähigkeit der Steuereinrichtung steigern soll. Weiterhin soll der modulartige Softwareaufbau eine zielgerichtete und anwendungsbezogene Gestaltung der einzelnen Modelle ermöglichen, die auf einfachem Wege in die Steuereinheit integrierbar sein sollen. Im übrigen sollen zusätzliche Fahrerassistenzfunktionen mühelos durch einen ergänzenden Software- Baustein in das Gesamtsystem einfügbar sein.

Durch die hier beschriebene Vorrichtung wird also insgesamt ein sicherer und die jeweilige Fahrsituation berücksichtigender Betrieb der Bremsanlage z.B. zur Unterstützung einer Anfahrhilfe- bzw. Hillholder- Funktion gewährleistet, nachteilig ist bei diesem System jedoch, daß hier zur Ausführung dieser Funktion nur die Bremsanlage, nicht jedoch die Kupplungseinrichtung ausgenutzt wird. Wünschenswert wäre es hier zur Verbesserung des Komforts z.B. bei Berganfahrten und zur Verkürzung der Ansprechzeit für die Anfahrhilfe die Kupplungsfunktion mit auszunutzen, wobei auch die Handhabung der Anfahrhilfe verbessert werden und ein funktionsgerechtes, möglichst verschleißarmes Arbeiten gegeben sein soll.

Weiterhin ist aus der DE 196 25 919 A1 ein System zur Steuerung der Bremswirkung bei einem Kraftfahrzeug bekannt, mit Mitteln zu einer von einer Fahrerbetätigung unabhängigen Einstellung der Bremswirkung. Auf ein Erkennen eines vorgebbaren Betriebsmodus hin, bei dem wenigstens die Fahrzeuglängsgeschwindigkeit Null festgestellt wird, wird eine bestimmte Bremswirkung aufgebracht. Ein solcher Betriebsmodus kann z.B. vorliegen, wenn eine Kriechunterdrückung bei einem Fahrzeug mit Automatikgetriebe oder eine Anfahrhilfe bzw. ein Hillholder bei einem Fahrzeug mit Schaltgetriebe gewünscht wird. Dabei ist vorgesehen, daß bei Feststellen einer vorgebbaren Fahrzeuglängsgeschwindigkeit während eines solchen Betriebsmodus die Bremswirkung unabhängig vom Fahrer erhöht wird. Es soll dabei durch das Beobachten der Fahrzeuglängsgeschwindigkeit während des Betriebsmodus "Kriechunterdrückung" bzw. "Hillholder- Modus" sicher ein vom Fahrer ungewolltes Fortbewegen des Fahrzeuges unterbunden werden. Dabei ist gemäß einer Ausführungsform vorgesehen, daß der Betriebsmodus beispielsweise dann erkannt wird, wenn neben der Fahrzeuglängsgeschwindigkeit Null erkannt wird, daß ein vom Fahrer des Fahrzeuges betätigbares Schaltmittel eine vorgebbare Stellung (Anfahrhilfe) aufweist.

Weiterhin ist bei dem beschriebenen System vorgesehen, daß zur Sensierung der Aktivierungsbedingungen für den Betriebsmodus (Kriechunterdrückungsmodus bzw.

Hillholder- Modus) nur solche Signale verwendet werden, die in Fahrzeugen mit einem Antiblockier-/Antischlupf-/ Fahrdynamikregelsystem (ABS/ASR/FDR) ohnehin vorliegen. Die Funktion der Kriechunterdrückung bzw. die Anfahrhilfe könne somit ohne Zusatzsensorik in ein ABS/ASR/FDR- System integriert werden. Bei einer aktivierten Kriechunterdrückung bzw. Anfahrhilfe werde die Bremswirkung (im Falle einer hydraulischen Bremsanlage der Bremsdruck) selbsttätig erhöht, wenn die vom Fahrer zunächst aufgebrachte Bremswirkung nicht ausreiche, um das Fahrzeug im Stillstand zu halten. Ein ungewolltes Fortbewegen des Fahrzeuges trotz aktivierter Kriechunterdrückung bzw. Anfahrhilfe könne beispielsweise durch eine Leckage in dem Hydrauliksystem oder durch eine erhöhte Fahrzeugzuladung bedingt sein.

Mit dem beschriebenen System wird also durch das Beobachten der Fahrzeuglängsgeschwindigkeit während des Betriebsmodus "Kriechunterdrückung" bzw. "Hillholder- Modus" sicher ein vom Fahrer ungewolltes Fortbewegen des Fahrzeuges unterbunden, nachteilig ist jedoch auch bei diesem System, daß zur Ausführung dieser Funktion wieder nur die Bremsanlage, nicht jedoch die Kupplungseinrichtung ausgenutzt wird. Wünschenswert wäre auch hier zur Verbesserung des Komforts z.B. bei Berganfahrten und zur Verkürzung der Ansprechzeit für die Anfahrhilfe die Kupplungsfunktion mit auszunutzen, wobei auch in diesem Falle insb. die Handhabung der Anfahrhilfe verbessert werden und ein funktionsgerechtes, möglichst verschleißarmes Arbeiten gegeben sein soll.

Bei weiterhin bekannten Systemen mit Anfahrhilfen ist auch bekannt, die Kupplungsfunktion bei der Realisierung der Anfahrhilfe mit auszunutzen, wobei hier bei der Verwendung von zumeist Reibungskupplungen insb. die zumeist nicht unerhebliche Hitzeentwicklung von Nachteil ist.

Ausgehend von diesen bekannten Systemen mit Anfahrhilfe- bzw. Hillholder-Funktionen liegt der Erfindung die Aufgabe zugrunde, die bekannten Anordnungen unter Beibehaltung der bisherigen Vorteile in der Weise zu verbessern bzw. weiterzuentwickeln, daß die Nachteile der zuvor diskutierten Lösungen vermieden werden, d.h. es soll insb. die Kupplungsfunktion bei der Realisierung der Anfahrhilfe mit ausgenutzt werden, bzw. es soll die vorteilhafte Funktion eines automatischen Kupplungs- und Bremssystemes mit ausgenutzt werden, wobei die Handhabung bzw. Bedienung der Anfahrhilfe möglichst einfach, d.h. möglichst ohne Betätigung zusätzlicher Bedienelemente erfolgen soll, weiterhin soll das gewünschte System möglichst funktionsgerecht und verschleißarm arbeiten. Weiterhin ist es die Aufgabe der vorliegenden Erfindung, eine Anfahrhilfe auch einfach und funktionsgerecht für ein Direktschaltgetriebe mit einer Doppelkupplung nutzbar zu machen. Bei diesen Direktschaltgetrieben wird versucht, die Vorteile eines Automatikgetriebes mit den Vorteilen eines manuellen Getriebes zu kombinieren.

Die Aufgabe wird erfindungsgemäß dadurch gelöst, daß die Bedieneinrichtung zur Durchführung des gestützten Anfahrvorganges im wesentlichen durch das Gaspedal des Fahrzeuges gebildet ist. Auf diese Weise wird erstmalig mit einfachen Mitteln die Möglichkeit geschaffen, eine Anfahrhilfe für ein Fahrzeug unter Ausnutzung der vorteilhaften Funktion eines automatischen Kupplungs- und Bremssystemes äußerst einfach, und zwar ohne die Betätigung zusätzlicher Bedienelemente, zu betreiben. Dadurch, daß bei der erfindungsgemäßen Anfahrhilfe die Bedieneinrichtung zur Durchführung des gestützten Anfahrvorganges im wesentlichen durch das Gaspedal des Fahrzeuges gebildet ist, d.h., daß die Ausführung der Hillholder- Funktion z.B. zum Halten eines Fahrzeuges an einem Berg ausschließlich über das Gaspedal erfolgt, welches mit der Steuereinrichtung für das automatische Kupplungs- und Bremssystem in Wirkverbindung steht, wird insb. die Hitze- bzw. Wärmeentwicklung in der Kupplung wesentlich reduziert. Weiterhin läßt sich die erfindungsgemäße, ausschließlich über das Gaspedal bedienbare Anfahrhilfe bevorzugt in Direktschaltgetrieben mit einer Doppelkupplung anwenden.

Die Verwendung der erfindungsgemäßen Anfahrhilfe erfordert die Erfassung bzw. Indentifikation der speziellen Fahrsituation. Demgemäß ist bei der bevorzugten Ausführungsform der vorliegenden Erfindung die zur Steuerung des gestützten Anfahrvorganges ausgebildete Steuerungseinrichtung der Anfahrhilfe zur Erfassung bzw. Identifizierung der Fahrsituation, insbesondere der Fahrsituation "Stillstand", ausgebildet. Dabei empfiehlt es sich, daß die Anfahrhilfe zur Aufnahme von Sensorsignalen zur Verarbeitung in Steuersignale für den gestützten Anfahrvorgang in der Steuereinrichtung Erfassungssensoren und/oder -einrichtungen zur Erfassung von Zustandsdaten für Fahrzeugparameter, Schalterstellungen etc. aufweist.

Nach einem weiteren Merkmal der vorliegenden Erfindung ist dabei vorgesehen, daß zur Erfassung bzw. Identifizierung der Fahrsituation die Anfahrhilfe zur Aufnahme von Sensorsignalen zur Verarbeitung in der Steuereinrichtung Erfassungssensoren bzw. -einrichtungen für den Zustand des Getriebes, des Motors, des Gaspedales, des übertagenden Drehmomentes, des Kupplungs- und Bremssystemes, der Fahrzeugbewegung und/oder eine Einrichtung für die Messung der abgelaufenen Zeit aufweist. Dabei ist vorzugsweise zur Erfassung bzw. Identifizierung der Fahrsituation "Stillstand" vorgesehen, daß die Steuereinrichtung zur Auslösung der Steuersignale zur Beaufschlagung des automatischen Kupplungs- und Bremssystemes für den gestützten Anfahrvorgang für den Fall ausgebildet ist, daß die ErFassungssensoren bzw. -einrichtungen die Zustände "Getriebe im Eingriff', "Motor läuft", "Bremse gelöst", "Fahrzeugstillstand" und "Gleichbleiben dieser Zustände über einen definierten Zeitraum" aufnehmen bei gleichzeitiger Erfassung der Position des Gaspedales und des Wertes für das übertragende Drehmoment.

Es empfiehlt sich nach einem weiteren Ausgestaltungsmerkmal der vorliegenden Erfindung, daß die Anfahrhilfe zur Aufnahme von Sensorsignalen zur Verarbeitung in der Steuereinrichtung eine Erfassungseinrichtung für die Fahrzeugbewegung aufweist, die als Einrichtung zur Geschwindigkeitserfassung, insbesondere zur Erfassung sehr langsamer Geschwindigkeiten, ausgebildet ist. Zweckmäßig ist dabei vorzugsweise die Einrichtung zur Geschwindigkeitserfassung, insbesondere zur Erfassung sehr langsamer Geschwindigkeiten, zur Erfassung einer um den Nullpunkt pendelnden Geschwindigkeit und deren Richtungsänderung, insbesondere mehrerer Nullpunktdurchgänge bei langsamer Geschwindigkeit, ausgebildet. Die Situationserkennung "Fahrzeugstillstand" kann hier über die um den Nullpunkt pendelnde Geschwindigkeit erfolgen.

Nach einem weiteren Merkmal der vorliegenden Erfindung empfiehlt es sich nach Erfassung bzw. Identifizierung der Fahrsituation, insbesondere der Fahrsituation "Stillstand", daß die Steuereinrichtung mit der Auslösung der Steuersignale zur Beaufschlagung des automatischen Kupplungs- und Bremssstemes für den gestützten Anfahrvorgang zur Erfassung und Speicherung des übertragenden Drehmomentes ausgebildet ist, wobei sich über die ermittelten Meßwerte die Anfahrpunkte für die Kupplung und den benötigten Bremsdruck für das Kupplungsund Bremssystem zum Halten des Fahrzeuges ermitteln lassen. Es sind damit die Zielgrößen (Sollwerte) festgelegt, die dann z.B. über Rampen angefahren werden können.

Zweckmäßig ist es dabei nach einem weiteren Ausgestaltungsmerkmal der vorliegenden Erfindung, daß die Steuereinrichtung mit der Auslösung der Steuersignale zur Beaufschlagung des automatischen Kupplungs- und Bremssystemes für den gestützten Anfahrvorgang und nach Erfassung und Speicherung des übertragenden Drehmomentes zur Bereitstellung einer Hillholder-Funktion derart ausgebildet ist, daß in Abhängigkeit der Geschwindigkeit die Kupplung geöffnet und der Bremsdruck erhöht wird und umgekehrt. Dabei empfiehlt es sich, daß die Steuereinrichtung zur Bereitstellung der Hillholder- Funktion eine Überschneidungsschaltung umfaßt, die in besonders vorteilhafter, überschneidender Weise für ein schnelleres Ansprechen und einen besseren Komfort z.B. bei Berganfahrten, bewirkt, daß in Abhängigkeit der Geschwindigkeit die Kupplung geöffnet und der Bremsdruck erhöht wird und umgekehrt.

Nach einem weiteren Ausgestaltungsmerkmal der vorliegenden Erfindung empfiehlt es sich, daß die Steuereinrichtung zur Ausführung der Hillholder- Funktion derart ausgebildet ist, daß bei der Gaspedal- Position "mehr Gas" das Beaufschlagen des automatischen Kupplungs- und Bremssystemes erfolgt. Dabei ist nach einem bevorzugten Ausgestaltungsmerkmal der vorliegenden Erfindung die Steuereinrichtung zur Ausführung der Hillholder- Funktion derart ausgebildet, daß bei der Gaspedal- Position "mehr Gas" das Beaufschlagen des automatischen Kupplungs- und Bremssystemes in der Weise erfolgt, daß in Abhängigkeit der Geschwindigkeit die Kupplung zum Anfahren gemäß einer gespeicherten Drehmomentgröße in Eingriff kommt und die Bremse sich löst.

Es ist nach einem weiteren Ausgestaltungsmerkmal der vorliegenden Erfindung vorgesehen, daß die Steuereinrichtung zur Bereithaltung der Hillholder- Funktion derart ausgebildet ist, daß bei unveränderter Gaspedal- Position der aktuelle Systemzustand beibehalten wird.

Nach einem letzten Ausgestaltungsmerkmal der vorliegenden Erfindung ist die Steuereinrichtung zur Unterbrechung oder Ausschaltung der Hillholder- Funktion derart ausgebildet, daß bei der Gaspedal- Position "weniger Gas" die Bremse sich löst.

Die Erfindung ist in den Figuren der Zeichnung in einem Ausführungsbeispiel dargestellt. Es zeigen:
- Fig. 1: eine schematische Prinzipdarstellung der einzigen Ausführungsform der erfindungsgemäßen Anfahrhilfe in einem Blockschaltbild,
- Fig. 2: ein Flußdiagramm bzgl. der Wirkungsweise der Steuereinrichtung der in Fig. 1 dargestellten Ausführungsform der erfindungsgemäßen Anfahrhilfe,
- Fig. 3: eine Darstellung des Verlaufes des übertragenden Drehmomentes der Kupplung und des Bremsmomentes in Abhängigkeit der Zeit.

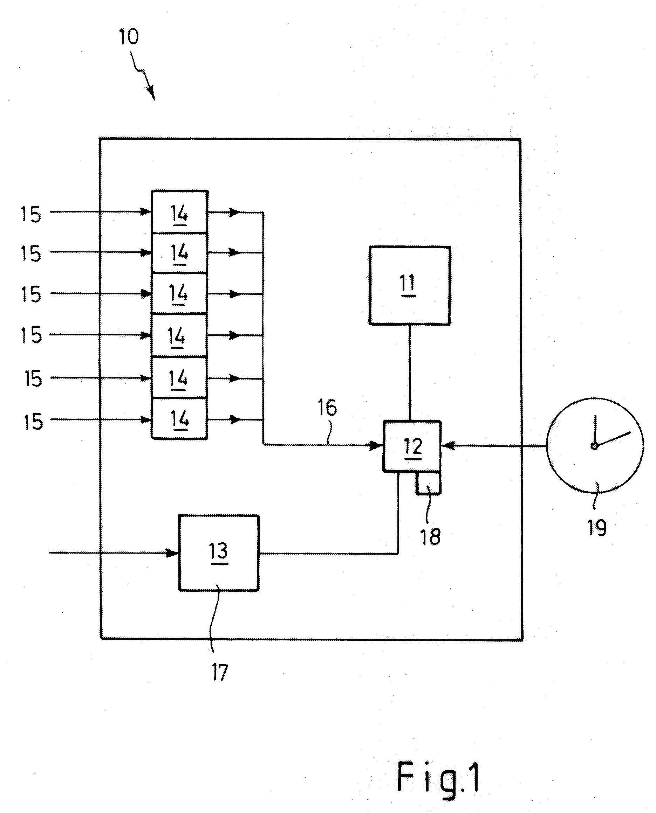

Die erfindungsgemäße Anfahrhilfe ist generell mit 10 bezeichnet. Die Anfahrhilfe 10 ist vorgesehen für ein Fahrzeug, insbesondere für ein Kraftfahrzeug, mit einem mit 11 bezeichneten automatischen Kupplungs- und Bremssystem und mit einer mit 12 bezeichneten elektronischen Steuereinrichtung, wobei diese im wesentlichen der Steuerung des automatischen Kupplungs- und Bremssystemes 11 dient. Die erfindungsgemäße Anfahrhilfe 10 ist in der Fig. 1 der Zeichnung in einer Ausführungsform prinzipiell in einer schematischen Blockbilddarstellung gezeigt. Die Anfahrhilfe 10 umfaßt dabei neben dem erwähnten automatischen Kupplungs- und Bremssystem 11 und der dieser i.w. zugeordneten Steuereinrichtung 12 eine vom Fahrzeugführer willkürlich zu betätigende, mit 13 bezeichnete Bedieneinrichtung zur Durchführung eines gestützten Anfahrvorganges. Dabei ist die Steuereinrichtung 12 für das Kupplungs- und Bremssystem 11 auch zur Steuerung des gestützten Anfahrvorganges ausgebildet ist, derart, daß ausgehend von über mit 14 bezeichneten Erfassungssensoren und - einrichtungen aufgenommenen Sensorsignalen 15 Steuersignale 16 zur Beaufschlagung des automatischen Kupplungs- und Bremssystemes 11 für den gestützten Anfahrvorgang gemäß dem Wunsch des Fahrzeugführers von der Steuereinrichtung 12 ausgegeben werden. Es sind dazu in der Fig. 1 der Zeichnung insgesamt sechs noch näher zu erläuternde Erfassungssensoren und - einrichtungen 14 dargestellt, von denen entsprechend sechs Sensorsignale 15 aufgenommen werden und von denen entsprechend wiederum sechs Steuersignale 16 an die Steuereinrichtung 12 abgegeben werden zwecks Beaufschlagung des automatischen Kupplungs- und Bremssystemes 11 der Anfahrhilfe 10 von dieser Steuereinrichtung 12. Es ist dabei erfindungsgemäß vorgesehen, daß die Bedieneinrichtung 13 zur Durchführung des gestützten Anfahrvorganges im wesentlichen durch das Gaspedal 17 des Fahrzeuges gebildet ist.

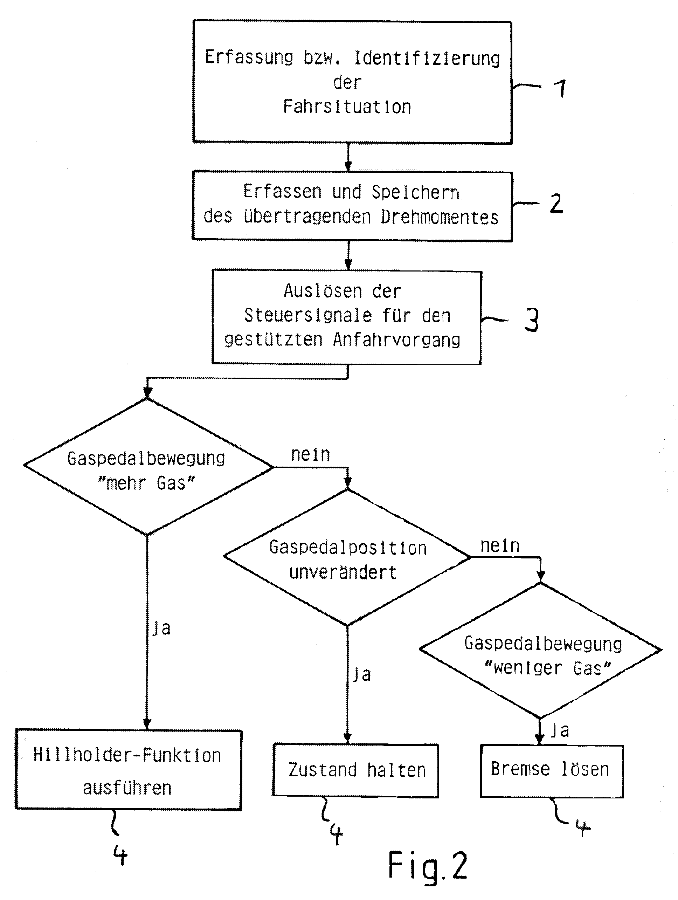

Es erfordert nun die Verwendung der erfindungsgemäßen Anfahrhilfe 10 die Erfassung bzw. Indentifikation der speziellen Fahrsituation. Demgemäß ist bei der bevorzugten Ausführungsform der vorliegenden Erfindung die zur Steuerung des gestützten Anfahrvorganges ausgebildete Steuerungseinrichtung 12 der Anfahrhilfe 10 zur Erfassung bzw. Identifizierung der Fahrsituation, insbesondere der Fahrsituation "Stillstand", ausgebildet. Es sei dazu auch auf die Fig. 2 der Zeichnung verwiesen, die ein Flußdiagramm bzgl. der Wirkungsweise der Steuereinrichtung 12 der in Fig. 1 dargestellten Ausführungsform der erfindungsgemäßen Anfahrhilfe 10 zeigt, wobei hier bei Punkt 1 die Erfassung bzw. Identifizierung der Fahrsituation angedeutet dargestellt ist.

Bei dem in den Fig. 1 der Zeichnung dargestellten Ausführungsbeispiel der erfindungsgemäßen Anfahrhilfe 10 weist die Anfahrhilfe 10 zur Aufnahme von Sensorsignalen 15 zur Verarbeitung in Steuersignale für den gestützten Anfahrvorgang in der Steuereinrichtung 12 Erfassungssensoren und/oder - einrichtungen 14 zur Erfassung von Zustandsdaten für Fahrzeugparameter, Schalterstellungen etc. auf. Dies geschieht bei dem dargestellten Ausführungsbeispiel in der Weise, daß die Anfahrhilfe 10 zur Aufnahme von Sensorsignalen 15 zur Verarbeitung in der Steuereinrichtung 12 Erfassungssensoren bzw. -einrichtungen 14 für den Zustand des Getriebes, des Motors, des Gaspedales 17, des übertragenden Drehmomentes, des Kupplungs- und Bremssystemes 11, der Fahrzeugbewegung und/oder eine Einrichtung 19 für die Messung der abgelaufenen Zeit aufweist. Diese erwähnten Erfassungssensoren bzw. -einrichtungen 14 bzw. die Einrichtung 19 für die Messung der abgelaufenen Zeit sind in der Fig. 1 der Zeichnung jeweils schematisch dargestellt.

Es ist dabei in diesem Falle zur Erfassung bzw. Identifizierung der Fahrsituation "Stillstand" vorgesehen, daß die Steuereinrichtung 12 zur Auslösung der Steuersignale zur Beaufschlagung des automatischen Kupplungs- und Bremssystemes 11 für den gestützten Anfahrvorgang für den Fall ausgebildet ist, daß die Erfassungssensoren bzw- einrichtungen 14 die Zustände "Getriebe im Eingriff", "Motor läuft", "Bremse gelöst", "Fahrzeugstillstand" und "Gleichbleiben dieser Zustände über einen definierten Zeitraum" aufnehmen bei gleichzeitiger Erfassung der Position des Gaspedales 17 und des Wertes für das übertragende Drehmoment. Die Erfassung dieser Zustände ist in der Fig. 2 der Zeichnung in Block 1 zusammengefaßt.

Bei dem dargestellten Ausführungsbeispiel weist weiterhin die Anfahrhilfe 10 zur Aufnahme von Sensorsignalen 15 zur Verarbeitung in der Steuereinrichtung 12 eine Erfassungseinrichtung 14 für die Fahrzeugbewegung auf, die als Einrichtung zur Geschwindigkeitserfassung, insbesondere zur Erfassung sehr langsamer Geschwindigkeiten, ausgebildet ist. Es ist dabei diese Einrichtung zur Geschwindigkeitserfassung, insbesondere zur Erfassung sehr langsamer Geschwindigkeiten, zur Erfassung einer um den Nullpunkt pendelnden Geschwindigkeit und deren Richtungsänderung, insbesondere mehrerer Nullpunktdurchgänge bei langsamer Geschwindigkeit, ausgebildet. Die Situationserkennung "Fahrzeugstillstand" erfolgt hier über die um den Nullpunkt pendelnde Geschwindigkeit.

Es ist im weiteren bei dem dargestellten Ausführungsbeispiel die Steuereinrichtung 12 mit der Auslösung der Steuersignale 16 zur Beaufschlagung des automatischen Kupplungs- und Bremssstemes 11 für den gestützten Anfahrvorgang zur Erfassung und Speicherung des übertragenden Drehmomentes ausgebildet, wobei sich über die ermittelten Meßwerte die Anfahrpunkte für die Kupplung und den benötigten Bremsdruck für das Kupplungs- und Bremssystem 11 zum Halten des Fahrzeuges ermitteln lassen. Es ist dieser 2. Schritt der Erfassung und Speicherung des übertragenden Drehmomentes in der Fig. 2 der Zeichnung in Block 2 dargestellt. Weiterhin ist die Steuereinrichtung 12 mit der Auslösung der Steuersignale 16 zur Beaufschlagung des automatischen Kupplungs- und Bremssystemes 11 für den gestützten Anfahrvorgang und nach Erfassung und Speicherung des übertragenden Drehmomentes zur Bereitstellung einer Hillholder- Funktion derart ausgebildet, daß in Abhängigkeit der Geschwindigkeit die Kupplung geöffnet und der Bremsdruck erhöht wird und umgekehrt. Es ist dazu in Block 3 der Fig. 2 der Zeichnung die Funktion des Auslösens der Steuersignale für den gestützten Anfahrvorgang und damit die Bereitstellung der Hillholder- Funktion (Kupplung öffnen und Bremsdruck erhöhen in Abhängigkeit der Geschwindigkeit) schematisch dargestellt.

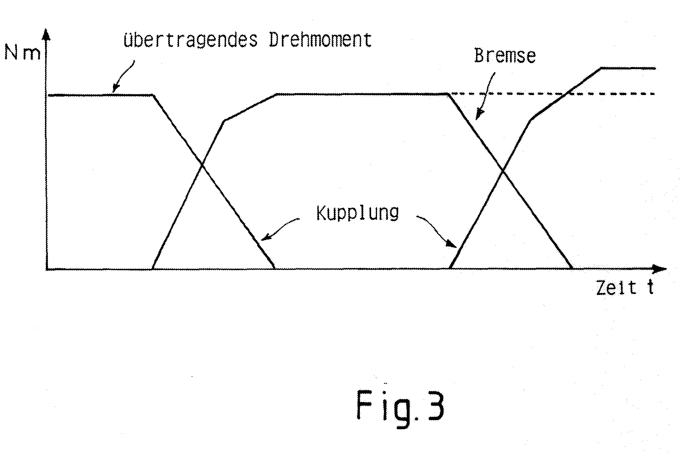

Die Steuereinrichtung 12 umfaßt zur Bereitstellung der Hillholder- Funktion bevorzugt eine Überschneidungsschaltung 18, die in besonders vorteilhafter, überschneidender Weise für ein schnelleres Ansprechen und einen besseren Komfort insb. bei Berganfahrten bewirkt, daß in Abhängigkeit der Geschwindigkeit die Kupplung geöffnet und der Bremsdruck erhöht wird und umgekehrt. Es ist dazu in der Fig. 3 der Zeichnung die Wirkungsweise dieser Überschneidungsschaltung 18 anhand der Darstellung des Verlaufes des übertragenden Drehmomentes der Kupplung und des Bremsmomentes in Abhängigkeit der Zeit aufgezeigt. Es wird dabei in den sich überschneidenden Bereichen in der dargestellten linearen Weise die Kupplung geöffnet und gleichzeitig der Bremsdruck erhöht und umgekehrt.

Bei der erfindungsgemäßen Anfahrhilfe 10 ist außerdem vorgesehen, daß, siehe wieder die Fig. 2 der Zeichnung, die Steuereinrichtung 12 zur Ausführung der Hillholder- Funktion derart ausgebildet ist, daß bei der Gaspedal- Position "mehr Gas" das Beaufschlagen des automatischen Kupplungs- und Bremssystemes 11 erfolgt. Dabei ist die Steuereinrichtung 12 zur Ausführung der Hillholder- Funktion derart ausgebildet, daß bei der Gaspedal- Position "mehr Gas" das Beaufschlagen des automatischen Kupplungs- und Bremssystemes 11 in der Weise erfolgt, daß in Abhängigkeit der Geschwindigkeit die Kupplung zum Anfahren gemäß einer gespeicherten Drehmomentgröße in Eingriff kommt und die Bremse sich löst. Dieser Fall ist in der Fig. 2 der Zeichnung im linken Teil des Blockes 4 unter der Funktion "Hillholder- Funktion ausführen" aufgezeigt.

Für den anderen Fall, d.h. also den Fall Gaspedal- Position nicht "mehr Gas" ist einerseits vorgesehen, daß die Steuereinrichtung 12 zur Bereithaltung der Hillholder-Funktion derart ausgebildet ist, daß bei unveränderter Gaspedal- Posit ion der aktuelle Systemzustand beibehalten wird. Dieser Fall ist in der Fig. 2 der Zeichnung im mittleren Teil des Blockes 4 unter der Funktion "Zustand halten" dargestellt. Andererseits ist vorgesehen, daß die Steuereinrichtung 12 zur Unterbrechung oder Ausschaltung der Hillholder- Funktion derart ausgebildet ist, daß bei der Gaspedal-Position "weniger Gas" die Bremse sich löst. Dieser Fall ist in der Fig. 2 der Zeichnung im rechten Teil des Blockes 4 unter der Funktion "Bremse lösen" dargestellt.

Mit der erfindungsgemäßen Anfahrhilfe 10 wird die Möglichkeit geschaffen, eine Anfahrhilfe 10 für ein Fahrzeug unter Ausnutzung der vorteilhaften Funktion eines automatischen Kupplungs- und Bremssystemes 11 äußerst einfach, und zwar ohne die Betätigung zusätzlicher Bedienelemente, zu betreiben. Dadurch, daß bei der erfindungsgemäßen Anfahrhilfe 10 die Bedieneinrichtung 13 zur Durchführung des gestützten Anfahrvorganges im wesentlichen durch das Gaspedal 17 des Fahrzeuges gebildet ist, d.h., daß die Ausführung der Hillholder- Funktion z.B. zum Halten eines Fahrzeuges an einem Berg ausschließlich über das Gaspedal 17 erfolgt, welches mit der Steuereinrichtung 12 für das automatische Kupplungs- und Bremssystem 11 in Wirkverbindung steht, wird insb. die Hitze- bzw. Wärmeentwicklung in der Kupplung wesentlich reduziert.

Die erfindungsgemäße, ausschließlich über das Gaspedal 17 bedienbare Anfahrhilfe 10 läßt sich bevorzugt in Direktschaltgetrieben mit einer Doppelkupplung anwenden. Diese Direktschaltgetriebe bestehen im wesentlichen aus zwei Teilgetrieben, wobei im ersten die Gänge eins, drei, fünf und der Rückwärtsgang untergebracht sind, und im zweiten Teilgetriebe die Gänge zwei, vier und sechs. Dabei ist beiden Teilgetrieben jeweils eine eigene Kupplung zugeordnet. Dieser Verbund gewährleistet, daß jeweils die nächste Fahrstufe permanent in Lauerstellung darauf wartet, aktiv zu werden. Wenn z.B. das Fahrzeug im dritten Gang gefahren wird, ist der vierte Gang im "anderen" Getriebe bereits eingelegt. Entscheidet die Elektronik, daß der ideale Schaltpunkt erreicht ist, wird die eine Kupplung geöffnet, der dritte Gang herausgenommen, und die andere Kupplung wird geschlossen und der vierte Gang wird gleichzeitig eingelegt. Dabei kommt es zur Überschneidung zwischen dem Öffnen und Schließen der jeweiligen Kupplung, was aber nur wenige Hunderstel Sekunden dauert und für den Fahrer praktisch unmerklich geschieht. Das Direktschaltgetriebe hat den Vorteil, daß die Beschleunigung von keiner Zugkraftunterbrechung zwischen Motor und Getriebe gestört bzw. insb. gebremst wird. Die Gänge werden vielmehr sanft eingelegt, die übliche Pause beim Gangwechsel ist eliminiert. Die Elektronik bewirkt dabei auch, daß selbst beim Überspringen eines Ganges beim Zurückschalten nur eine minimale Verzögerung zu spüren ist. Beim Direktschaltgetriebe kann der Fahrer wahlweise die Gänge manuell anwählen und damit besonders sportlich fahren. Dabei werden selbst extreme Schaltvorgänge wie ein Wechsel vom sechsten in den zweiten Gang problemlos ausgeführt. Fährt man im Automatikmodus, bemerkt man Schaltvorgänge lediglich am Geräusch und der sich ändernden Drehzahl. Mit diesen Direktschaltgetrieben wird erreicht, die Vorteile eines mit Automatik betriebenen Fahrzeuges in alltagstauglicher Weise mit den Vorteilen eines mit manuellem Schaltgetriebe betriebenen Fahrzeuges zu kombinieren. Es wird dabei durch die erfindungsgemäße Anfahrhilfe 10 erreicht, die Vorteile eines Automatikgetriebes zu nutzen, ohne daß die Kupplung sich übermäßig erwärmt oder erhitzt.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich. So kann insb. die Steuereinrichtung 12 eine von den dargestellten Ausführungsformen abweichende Ausbildung aufweisen, weiterhin sind bezüglich der Ausbildung und Anordnung der zur Aufnahme von Sensorsignalen 15 für die Steuereinrichtung 12 dienenden ErFassungssensoren und -einrichtungen unterschiedlichste Möglichkeiten denkbar. Schließlich sei darauf hingewiesen, daß die erfindungsgemäße Anfahrhilfe 10 bei den unterschiedlichsten Arten von Fahrzeugtypen einsetzbar ist.

### BEZUGSZEICHENLISTE

- 10: Anfahrhilfe
- 11: Kupplungs- und Bremssystem
- 12: Steuereinrichtung
- 13: Bedieneinrichtung (von 10)
- 14: Erfassungssensoren und -einrichtungen
- 15: Sensorsignal
- 16: Steuersignal (von 12 für 11)
- 17: Gaspedal
- 18: Überschneidungsschaltung (von 12)
- 19: Einrichtung zur Messung der abgelaufenen Zeit (für 12)

## Patentansprüche

1. Anfahrhilfe (10) für ein Fahrzeug, insbesondere für ein Kraftfahrzeug, mit einem automatischen Kupplungs- und Bremssystem (11) und mit einer elektronischen Steuereinrichtung (12), wobei diese im wesentlichen der Steuerung des automatischen Kupplungs- und Bremssystemes (11) dient, umfassend eine vom Fahrzeugführer willkürlich zu betätigende Bedieneinrichtung (13) zur Durchführung eines gestützten Anfahrvorganges, wobei die Steuereinrichtung (12) für das Kupplungs- und Bremssystem (11) auch zur Steuerung des gestützten Anfahrvorganges ausgebildet ist, derart, daß ausgehend von über Erfassungssensoren und -einrichtungen (14) aufgenommenen Sensorsignalen (15) Steuersignale (16) zur Beaufschlagung des automatischen Kupplungs- und Bremssystemes (11) für den gestützten Anfahrvorgang gemäß dem Wunsch des Fahrzeugführers von der Steuereinrichtung (12) ausgegeben werden,
**dadurch gekennzeichnet, daß**
die Bedieneinrichtung (13) zur Durchführung des gestützten Anfahrvorganges im wesentlichen durch das Gaspedal (17) des Fahrzeuges gebildet ist.

2. Anfahrhilfe nach Anspruch 1,
**dadurch gekennzeichnet, daß**
die zur Steuerung des gestützten Anfahrvorganges ausgebildete Steuerungseinrichtung (12) der Anfahrhilfe (10) zur Erfassung bzw. Identifizierung der Fahrsituation, insbesondere der Fahrsituation "Stillstand", ausgebildet ist.

3. Anfahrhilfe nach Anspruch 2,
**dadurch gekennzeichnet, daß**
die Anfahrhilfe (10) zur Aufnahme von Sensorsignalen (15) zur Verarbeitung in Steuersignale für den gestützten Anfahrvorgang in der Steuereinrichtung (12) ErFassungssensoren und/oder -einrichtungen (14) zur Erfassung von Zustandsdaten für Fahrzeugparameter, Schalterstellungen etc. aufweist.

4. Anfahrhilfe nach Anspruch 3,
**dadurch gekennzeichnet, daß**
die Anfahrhilfe (10) zur Aufnahme von Sensorsignalen (15) zur Verarbeitung in der Steuereinrichtung (12) Erfassungssensoren bzw. -einrichtungen (14) für den Zustand des Getriebes, des Motors, des Gaspedales (17), des übertragenden Drehmomentes, des Kupplungs- und Bremssystemes (11), der Fahrzeugbewegung und/oder eine Einrichtung (19) für die Messung der abgelaufenen Zeit aufweist.

5. Anfahrhilfe nach Anspruch 4,
**dadurch gekennzeichnet, daß**
die Steuereinrichtung (12) zur Auslösung der Steuersignale zur Beaufschlagung des automatischen Kupplungs- und Bremssystemes (11) für den gestützten Anfahrvorgang für den Fall ausgebildet ist, daß die Erfassungssensoren bzw. -einrichtungen (14) die Zustände "Getriebe im Eingriff", "Motor läuft", "Bremse gelöst", "Fahrzeugstillstand" und "Gleichbleiben dieser Zustände über einen definierten Zeitraum" aufnehmen bei gleichzeitiger Erfassung der Position des Gaspedales (17) und des Wertes für das übertragende Drehmoment.

6. Anfahrhilfe nach einem der Ansprüche 1 bis 4,
**dadurch gekennzeichnet, daß**
die Anfahrhilfe (10) zur Aufnahme von Sensorsignalen (15) zur Verarbeitung in der Steuereinrichtung (12) eine Erfassungseinrichtung (14) für die Fahrzeugbewegung aufweist, die als Einrichtung zur Geschwindigkeitserfassung, insbesondere zur Erfassung sehr langsamer Geschwindigkeiten, ausgebildet ist.

7. Anfahrhilfe nach Anspruch 6,
**dadurch gekennzeichnet, daß**
die Einrichtung zur Geschwindigkeitserfassung, insbesondere zur Erfassung sehr langsamer Geschwindigkeiten, zur Erfassung einer um den Nullpunkt pendelnden Geschwindigkeit und deren Richtungsänderung, insbesondere mehrerer Nullpunktdurchgänge bei langsamer Geschwindigkeit, ausgebildet ist.

8. Anfahrhilfe nach einem der Ansprüche 1 bis 7,
**dadurch gekennzeichnet, daß**
die Steuereinrichtung (12) mit der Auslösung der Steuersignale (16) zur Beaufschlagung des automatischen Kupplungs- und Bremssstemes (11) für den gestützten Anfahrvorgang zur Erfassung und Speicherung des übertragenden Drehmomentes ausgebildet ist, wobei sich über die ermittelten Meßwerte die Anfahrpunkte für die Kupplung und den benötigten Bremsdruck für das Kupplungs- und Bremssystem (11) zum Halten des Fahrzeuges ermitteln lassen.

9. Anfahrhilfe nach Anspruch 8,
**dadurch gekennzeichnet, daß**
die Steuereinrichtung (12) mit der Auslösung der Steuersignale (16) zur Beaufschlagung des automatischen Kupplungs- und Bremssystemes (11) für den gestützten Anfahrvorgang und nach Erfassung und Speicherung des übertragenden Drehmomentes zur Bereitstellung einer Hillholder- Funktion derart ausgebildet ist, daß in Abhängigkeit der Geschwindigkeit die Kupplung geöffnet und der Bremsdruck erhöht wird und umgekehrt.

10. Anfahrhilfe nach Anspruch 9,
**dadurch gekennzeichnet, daß**
die Steuereinrichtung (12) zur Bereitstellung der Hillholder- Funktio n eine Überschneidungsschaltung (18) umfaßt, die in besonders vorteilhafter, überschneidender Weise für ein schnelleres Ansprechen und einen besseren Komfort bewirkt, daß in Abhängigkeit der Geschwindigkeit die Kupplung geöffnet und der Bremsdruck erhöht wird und umgekehrt.

11. Anfahrhilfe nach einem der Ansprüche 1 bis 10,
**dadurch gekennzeichnet, daß**
die Steuereinrichtung (12) zur Ausführung der Hillholder- Funktion derart ausgebildet ist, daß bei der Gaspedal- Position "mehr Gas" das Beaufschlagen des automatischen Kupplungs- und Bremssystemes (11) erfolgt.

12. Anfahrhilfe nach Anspruch 11,
**dadurch gekennzeichnet, daß**
die Steuereinrichtung (12) zur Ausführung der Hillholder- Funktion derart ausgebildet ist, daß bei der Gaspedal- Position "mehr Gas" das Beaufschlagen des automatischen Kupplungs- und Bremssystemes (11) in der Weise erfolgt, daß in Abhängigkeit der Geschwindigkeit die Kupplung zum Anfahren gemäß einer gespeicherten Drehmomentgröße in Eingriff kommt und die Bremse sich löst.

13. Anfahrhilfe nach Anspruch 11 oder 12,
**dadurch gekennzeichnet, daß**
die Steuereinrichtung (12) zur Bereithaltung der Hillholder- Funktion derart ausgebildet ist, daß bei unveränderter Gaspedal- Position der aktuelle Systemzustand beibehalten wird.

14. Anfahrhilfe nach einem der Ansprüche 11 bis 13,
**dadurch gekennzeichnet, daß**
die Steuereinrichtung (12) zur Unterbrechung oder Ausschaltung der Hillholder- Funktion derart ausgebildet ist, daß bei der Gaspedal- Position "weniger Gas" die Bremse sich löst.
